# EUROPEAN PATENT SPECIFICATION

(11) **EP 2 654 242 B1**
(45) Date of publication and mention of the grant of the patent: **10.04.2019**
(21) Application number: 12748928.4
(22) Date of filing: 22.02.2012
(51) Int. Cl.: H04L 12/24, H04W 4/00, H04L 29/06, H04L 29/08, H04W 4/20, H04W 4/50

(54) **DEVICE MANAGEMENT METHOD AND APPARATUS**
GERÄTEVERWALTUNGSVERFAHREN UND -VORRICHTUNG
PROCÉDÉ ET DISPOSITIF DE GESTION DE DISPOSITIFS

(30) Priority: 24.02.2011 CN 201110045418
(43) Date of publication of application: 23.10.2013
(73) Proprietor: Huawei Device Co., Ltd., Dongguan, Guangdong 523808 (CN)
(72) Inventor: LIU, Haitao, Shenzhen Guangdong 518129 (CN)
(74) Representative: Gill Jennings & Every LLP
(86) International application number: PCT/CN2012/071438
(87) International publication number: WO 2012/113329

(56) References cited:
- EP-A1- 1 667 359
- EP-A1- 2 146 475
- WO-A1-2005/121989
- WO-A1-2009/102354
- WO-A2-2010/068448
- CN-A- 101 355 524
- CN-A- 101 667 926
- CN-A- 101 924 645
- "OMA Device Management Security ; OMA-TS-DM_Security-V1_2_1-20080617-A", OMA-TS-DM_SECURITY-V1_2_1-20080617-A, OPEN MOBILE ALLIANCE (OMA), 4330 LA JOLLA VILLAGE DR., SUITE 110 SAN DIEGO, CA 92122 ; USA , no. 1.2.1 17 June 2008 (2008-06-17), pages 1-27, XP064072144, Retrieved from the Internet: URL:ftp/Public_documents/DM/Permanent_docu ments/ [retrieved on 2008-07-02]

## Description

### TECHNICAL FIELD

The present invention relates to the field of mobile communication technologies, and in particular, to a device management method and apparatus.

### BACKGROUND

A device management (DM, Device Management) system is used for third party management and environment and configuration information setting on a terminal device, to resolve problems encountered in using processes of these devices, such as software and firmware installation, upgrade and other operations by using a wireless network (e.g. OTA, over the air), to provide more personalized and customized services, and to improve user experience. The third party may be an operator, a service provider, or an information management department of a partner.

A device management client (DM Client) on the terminal device is used to explain and execute a management command delivered by a DM server (DM Server). A device management data model stored on the terminal device may be deemed as an interface through which the DM server manages the terminal device, and the DM server communicates with the DM client on the terminal device through a DM protocol to implement management on the terminal device. The device management data model includes a management object (MO, Management Object), and the management object is formed by a node. The DM server achieves a purpose of managing the terminal device by operating the management object or the node. An operation command includes Add (add), Get (get), Replace (replace), Exec (execute), Copy (copy), Delete (delete), and the like.

Currently, in an open mobile alliance (OMA, Open Mobile Alliance)-DM protocol, access control rights of the DM server by the DM Client are ensured by using an access control list (ACL, Access Control List) mechanism. The ACL access control rights are authorized to an ID identifier of the DM server instead of a URI, an IP address or a certificate of the DM server. If the DM Client can directly access the DM Server, the DM Client receives an identifier of the DM Server in a DM session, and the DM Client compares the identifier with an ACL attribute value of a node to be accessed, so as to control the access control rights of the DM Server. DM Clients that cannot directly access the DM Server are usually configured behind a firewall, or the devices themselves do not support the OMA DM protocol. These DM clients are all located behind a gateway (Gateway).

For terminal device management under the Gateway in a proxy mode, the Gateway replaces the DM Server to manage the DM Client. A management message or a management session sent by the gateway to the DM Client only includes an ID identifier of the Gateway. The DM Client on the terminal device cannot determine, according to the ID identifier of the Gateway, whether to initiate a session, thereby rejecting access of the DM server. Therefore, the management on the terminal device cannot be completed.

EP 2 146 475 A provides a method and system for managing information stored and/or services configured in a mobile terminal from a remote terminal connected to a data network, wherein the mobile terminal comprises a web server having an API defined for each piece of information and for each service it provides, characterized by: requesting from a web server, from a remote terminal comprising a web browser, the creation of at least one web page configured to manage a piece of information stored or a service configured in a mobile terminal; making an HTTP request from the web server to the mobile terminal in accordance with said at least one API, wherein said HTTP request comprises an identifier of the information or service to be managed; sending an HTTP response from the mobile terminal to the web server in accordance with said at least one API; downloading in the remote terminal from the web server the at least one web page designed to manage said information or service of the mobile terminal.

### SUMMARY

To overcome existing problems in the prior art, the present invention provides a device management method and apparatus, so as to resolve a problem of access right control in managing a device management client by a device management server in a case that a Gateway exists.

An embodiment of the present invention provides a device management method, as disclosed in claim 1, where the method includes: receiving , by a gateway, a first Notification message sent by a device management (DM) server; generating, by the gateway, a second Notification message for the device, and providing, an ID identifier of the DM server in the Notification message for the device; sending, by the gateway, the generated second Notification message to the device; wherein the device parses the generated second Notification message to obtain the ID identifier of the DM Server, and at the same time, according to the management object (MO) ID provided in the second Notification message, obtains an access control list (ACL) attribute value of a corresponding MO and then performs ACL right control by comparing the ID identifier of the DM Server with the ACL attribute value. If a right permits, the device initiates a management session with the DM server, and if the right does not permit, the device rejects to initiate the management session with the DM server.

An embodiment of the present invention further provides a system comprising the DM server, the device and the gateway for implementing the above mentioned method.

The device management method and apparatus provided by the present invention resolves a problem of ACL right control in managing a DM Client by a DM Server in a case that a Gateway exists, so that an ACL mechanism of DM may be normally used for right control in the case that the Gateway exists.

### BRIEF DESCRIPTION OF DRAWINGS

Accompanying drawings described herein are provided for further understanding of the present invention, are a part of the present application, but are not intended to limit the present invention. In the accompanying drawings:
FIG. 1 is a signaling diagram of a device management method according to an embodiment of the present invention;
FIG. 2 is a signaling diagram of a device management method according to an embodiment of the present invention;
FIG. 3 is a signaling diagram of a device management method according to an embodiment of the present invention;
FIG. 4 is a signaling diagram of a device management method according to an embodiment of the present invention;
FIG. 5 is a signaling diagram of a device management method according to an embodiment of the present invention;
FIG. 6 is a signaling diagram of a device management method according to an embodiment of the present invention;
FIG. 7 is a signaling diagram of a device management method according to an embodiment of the present invention;
FIG. 8 is a signaling diagram of a device management method according to an embodiment of the present invention;
FIG. 9 is a block diagram of a device management apparatus according to an embodiment of the present invention;
FIG. 10 is a block diagram of a device management apparatus according to an embodiment of the present invention;
FIG. 11 is a block diagram of a device management apparatus according to an embodiment of the present invention;
FIG. 12 is a block diagram of a device management apparatus according to an embodiment of the present invention; and
FIG. 13 is a block diagram of a device management apparatus according to an embodiment of the present invention.

### DESCRIPTION OF EMBODIMENTS

To make the objectives, technical solutions, and advantages of the present invention more comprehensible, the following further describes the present invention in detail with reference to implementation manners and the accompanying drawings. Herein, the exemplary implementation manners of the present invention and their descriptions are merely provided for explaining the present invention instead of limiting the present invention.

### Embodiment 1

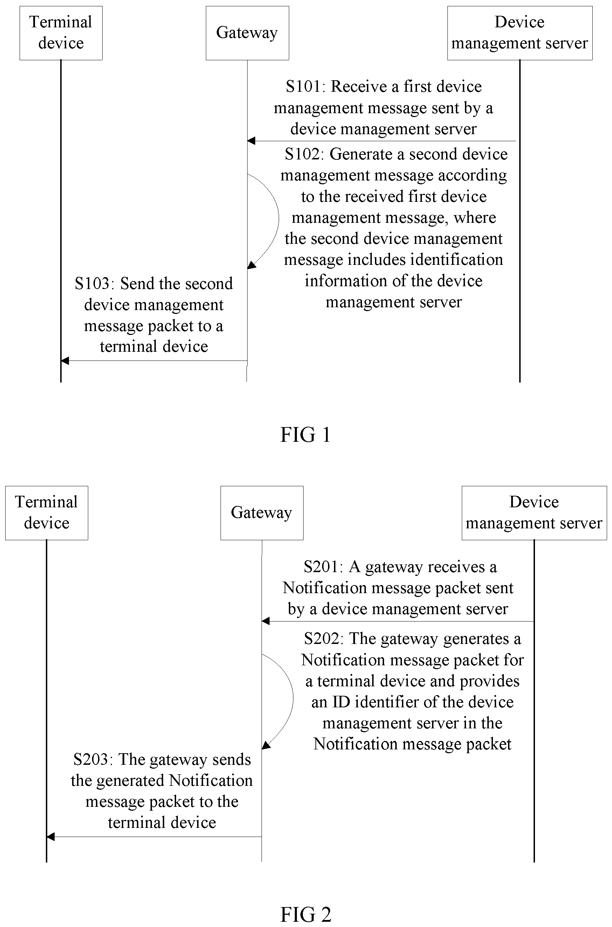

FIG. 1 is a signaling diagram of a device management method according to an embodiment of the present invention. As shown in FIG. 1, the device management method provided by the embodiment of the present invention includes the following steps:
S101: Receive a first device management message sent by a device management server.

In the embodiment of the present invention, a terminal device (Device) is bootstrapped (Bootstrap) by a Gateway and is also bootstrapped by the DM Server. That is to say, both a DMAcc (device management account) management object of the Gateway and a management object of the DM Server exist on the Device.

In the embodiment of the present invention, the Gateway receives a device management message sent by the DM Server. The device management message is a notification or trigger message (Notification), a device management message packet 2 (PK2), or a device management message packet 4 (PK4).

S102: Generate a second device management message according to the received first device management message, where the second device management message includes identification information of the device management server.

In the embodiment of the present invention, because the message received by the Gateway from the device management server and the message sent by the Gateway to the terminal device are both device management messages, in order to distinguish the received and sent device management messages, the received device management message is referred to as the first device management message, and the sent device management message is referred to as the second device management message. The Gateway generates the second device management message according to the received first device management message and provides an ID identifier of the DM Server in the second device management message.

S103: Send the second device management message to the terminal device.

In the embodiment of the present invention, the Gateway sends the generated second device management message to the Device. After receiving the second device management message, the Device performs an ACL comparison: If an access right permits, a corresponding management operation is performed; if the access right does not permit, the management operation is not performed and a failure code and a message are returned.

In the device management method provided by the embodiment of the present invention, ACL right control is performed through the Device, a crux of which is that the Gateway sends the ID identifier of the DM Server to the Device instead of only sending an ID identifier of the Gateway.

By using the device management method provided by the embodiment of the present invention, although what is received by the Device is the device management message sent by the Gateway, the Device still can learn the ID identifier of the DM Server which originally sends the device management message, so that the ACL right control is normally performed.

FIG. 2 is a signaling diagram of a device management method according to an embodiment of the present invention. As shown in FIG. 2, the device management method provided by the embodiment of the present invention includes the following steps:
S201: A Gateway receives a Notification message sent by a DM Server.

In the embodiment of the present invention, the DM Server initiates management on a Device, delivers a Notification message to the Gateway, the Gateway receives the Notification message sent by the DM Server, learning that the DM Server intends to manage the Device under the Gateway.

In the embodiment of the present invention, the Device is bootstrapped by the Gateway and is also bootstrapped by the DM Server. That is to say, both a DMAcc management object of the Gateway and a management object of the DM Server exist on the Device.

S202: The Gateway generates a Notification message for the Device, and provides an ID identifier of the DM Server in the Notification message.

In the embodiment of the present invention, the providing the ID identifier of the DM Server in the Notification message may be implemented by the following three manners:
Manner A: Reuse a transport field and a ServerID field in the Notification message, where the transport field extends a definition: Proxy=11, which is used for indicating that it is a proxy mode, and ID information of the DM Server is provided in ServerID.
Manner B: Extend the Notification message sent by the Gateway, and provide a Proxy field to indicate whether it is a proxy mode, and reuse a ServerID field at the same time.
Manner C: Extend the Notification message sent by the Gateway, and add a second ServerID field, which is used to provide the ID of the DM Server.

In the manner A and the manner B, only the ID identifier of the DM Server is provided. Because a Digest field in the Notification needs to be generated according to an authentication key of the DM server in a corresponding DMAcc management object on the Device, after receiving the Notification message sent by the DM Server, before generating the Notification, the proxy gateway Gateway needs to first initiate a management session to the Device, and obtain authentication key information of the DM Server from the Device, and then perform a hash calculation on a trigger (trigger information) part in the Notification packet by using the authentication key information to generate abstract data.

S203: The Gateway sends the generated Notification message to the Device.

In the embodiment of the present invention, the Gateway sends the generated Notification message to the Device. The Device receives the Notification message delivered by the Gateway and parses the message to obtain the ID identifier of the DM Server, and at the same time, according to the MO ID provided in the Notification message, obtains an ACL attribute value of a corresponding MO and then performs ACL right control. If a right permits, the Device initiates a management session, and if the right does not permit, the Device rejects to initiate the management session.

By using the embodiment, although what is received by the Device is the Notification message sent by the Gateway, the Device still can learn the ID identifier of the DM Server which actually sends the Notification message, so that the ACL right control is normally performed.

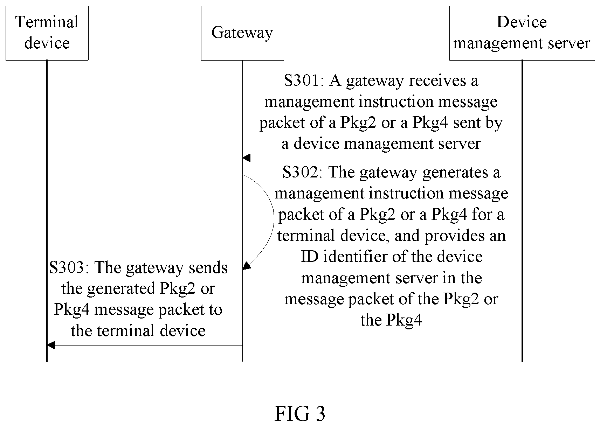

FIG. 3 is a signaling diagram of a device management method according to an embodiment of the present invention. As shown in FIG. 3, the device management method provided by the embodiment of the present invention includes the following steps:
S301: A Gateway receives a management instruction message of a Pkg2 or a Pkg4 sent by a DM Server.

In the embodiment of the present invention, the DM Server manages a Device behind the Gateway. A management instruction of the DM Server for the Device is first sent to the Gateway through the Pkg2 or the Pkg4.

In the embodiment of the present invention, the Device is bootstrapped by the Gateway and is also bootstrapped by the DM Server. That is to say, both a DMAcc management object of the Gateway and a management object of the DM Server exist on the Device.

S302: The Gateway generates a management instruction message of a Pkg2 or a Pkg4 for the Device, and provides an ID identifier of the DM Server in the message of the Pkg2 or the Pkg4.

In the embodiment of the present invention, the providing the ID identifier of the DM Server in the message of the Pkg2 or the Pkg4 may be implemented by using the following three solutions:
Solution A: Extend a field, which is used to provide the ID identifier of the DM Server, and a definition of the identifier may be as follows:
SourceSer
Usage: Used to provide an identifier of a DM server that initiates a management session;
Parent element: SyncHdr;
Sub element: LocURI;
Limitation: Only used in a management session message initiated by a Gateway serving as a proxy gateway;
Others: The element is optional.

If the identifier of the DM Server is: LocURI>http://www.syncml.org/mgmt-server, and an identifier of the proxy gateway Gateway is: GatewayUrl, a designation for a source address in the message of the Pkg2 or the Pkg4 sent by the Gateway is as follows:

```
          <Source>
          <LocURI>GatewayUrl</LocURI>
          </Source>
          <SourceSer>
                <LocURI>http://www.syncml.org/mgmt-server</LocURI>
          </SourceSer>
```

Solution B: Use an existing identifier character to provide the ID identifier of the DM Server, the identifier character is: SourceParent, and use of this field in DM may be redefined as follows:
SourceParent
Usage: Used to provide an identifier of a DM server that initiates a management session;
Parent element: SyncHdr;
Sub element: LocURI;
Limitation: Only used in a management session message initiated by a Gateway serving as a proxy gateway;
Others: The element is optional.

If the identifier of the DM Server is: LocURI>http://www.syncml.org/mgmt-server, and an identifier of the proxy gateway Gateway is: GatewayUrl, a designation for a source address in the Pkg2 or the Pkg4 sent by the Gateway is as follows:

```
          <Source>
                <LocURI>GatewayUrl</LocURI>
          </Source>
          <SourceParent>
                <LocURI>http://www.syncml.org/mgmt-server</LocURI>
          </SourceParent>
```

Solution C: Extend an alert code (Alert Code) used in a DM protocol to provide the ID of the DM Server, where a definition of the Alert Code is as follows:

| **Specified Device Management Alert Code** | | |
|---|---|---|
| 12xx | DM Server ID | Used for a proxy gateway to provide an ID identifier of a DM Server |

If the identifier of the DM Server is: LocURI>http://www.syncml.org/mgmt-server, a designation for a server address in the Pkg2 or the Pkg4 sent by the Gateway is as follows:

   ```
          <Alert>
           <CmdID>2</CmdID>
           <Data> 12xx</Data>
           <Item>
                <Data>http://www.syncml.org/mgmt-server</Data>
           </Item>
          </Alert>
```

S303: The Gateway sends the generated Pkg2 or Pkg4 to the Device.

In the embodiment of the present invention, the Gateway sends the generated Pkg2 or Pkg4 to the Device. The Device receives the Pkg2 or the Pkg4 delivered by the Gateway and parses the message packet to obtain the ID identifier of the DM Server, and at the same time, according to an identifier of an operation node provided in the message packet, obtains an ACL attribute value of a corresponding node and then performs ACL right control. If a right permits, the Device performs a corresponding operation, otherwise the Device rejects to perform the operation.

By using the embodiment, although what is received by the Device is the management instruction sent by the Gateway, the Device still can learn the ID identifier of the DM Server which actually manages the Device, so that the ACL right control is normally performed.

### Embodiment 2

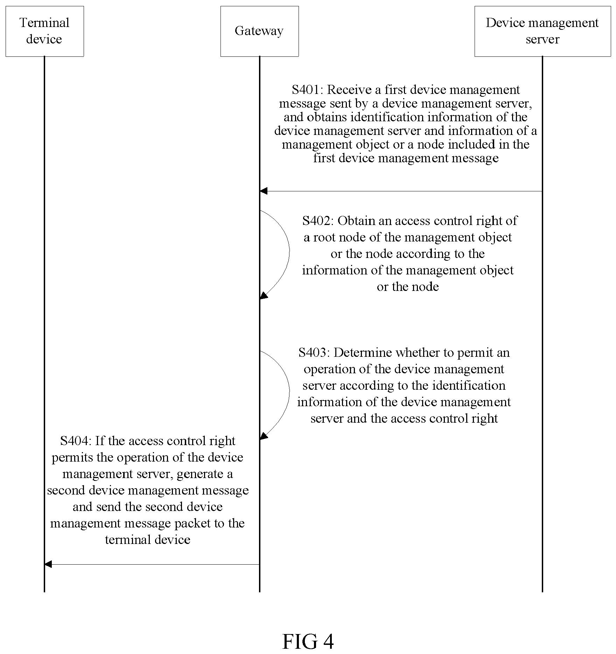

FIG. 4 is a signaling diagram of a device management method according to an embodiment of the present invention. As shown in FIG. 4, the device management method provided by the embodiment of the present invention includes the following steps:
S401: Receive a first device management message sent by a device management server, and obtain identification information of the device management server and information of a management object or a node included in the first device management message.

In the embodiment of the present invention, a Gateway receives a device management message sent by the DM Server, and the device management message is a Notification, a PK2 or a PK4.

In the embodiment of the present invention, the Gateway parses the received device management message, and obtains the identification information of the device management server and the information of the management object or the node included in the device management message. When the device management message is a Notification message, the information of the management object may be an MOID that needs to be managed by the DM Server; when the device management message is a PK2 or a PK4, the information of the management object may be an identifier of a node in a specific management object.

S402: Obtain an access control right of a root node of the management object or the node according to the information of the management object or the node.

In the embodiment of the present invention, the Gateway obtains an ACL of the root node of the management object or the node according to the obtained information of the management object or the node. The Gateway may initiate a management session to a Device according to the obtained MOID or an identifier of an operation node, obtain the ACL of the corresponding node or MO root node, and may also locally query the ACL of the corresponding node or MO.

S404: If the access control right permits an operation of the device management server, a second device management message is generated and the second device management message is sent to the terminal device.

In the embodiment of the present invention, if in the access control list, the operation of the device management server is permitted, the Gateway sends the generated device management message to the terminal device. If in the access control list, the operation of the device management server is not permitted, the Gateway does not send the device management message to the terminal device.

In another embodiment of the present invention, between step S402 and step S404, step S403 may be further included to determine, according to the identification information of the device management server and the access control right, whether the operation of the device management server is permitted.

In the embodiment of the present invention, the Gateway determines, according to the obtained ACL and the identification information of the device management server, whether a Server that initiates a session meets an access permission requirement.

The device management method provided by the embodiment of the present invention performs ACL right control through the Gateway, a crux of which is that the Gateway obtains an ACL attribute value of the corresponding MO root node or node on the device that the DM Server intends to manage.

In the embodiment, the Gateway replaces the Device to manage the ACL right control, which avoids changing an existing device management procedure or a command and reduces processing resource consumption of the Device.

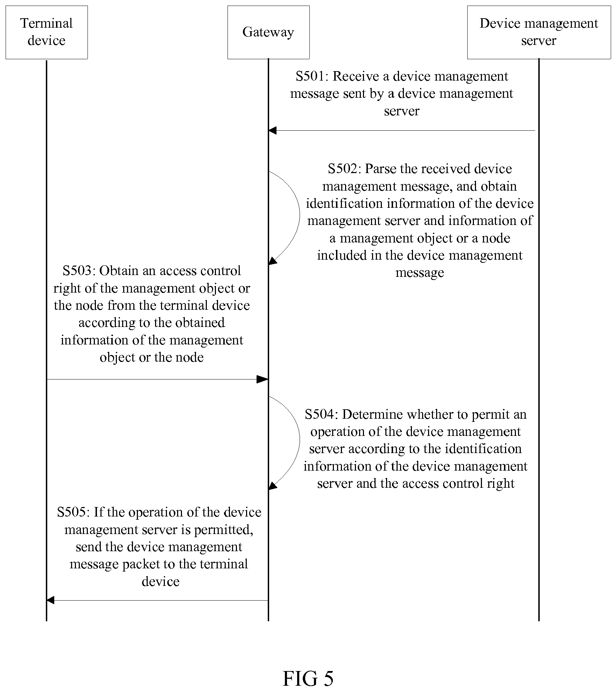

FIG. 5 is a signaling diagram of a device management method according to an embodiment of the present invention. As shown in FIG. 5, the device management method provided by the embodiment of the present invention includes the following steps:
S501: Receive a device management message sent by a device management server.

In the embodiment of the present invention, a Device is bootstrapped by a Gateway and is also bootstrapped by the DM Server. That is to say, both a DMAcc management object of the Gateway and a management object of the DM Server exist on the Device.

In the embodiment of the present invention, the DM Server sends a Notification message or a PK2 or a PK4 of normal management session to the Gateway. The Notification message provides an MOID that needs to be managed by the DM Server. For example, an MOID of an SCOMO management object is: urn:oma:mo:oma-scomo:1.0, and the Pk2 or the Pk4 provides an identifier of an operation node, such as: <LocURI>./settings/wap_settings/CNN</LocURI>. The Gateway receives the device management message sent by the DM Server.

S502: Parse the received device management message and obtain identification information of the device management server and information of a management object or a node that needs to be managed included in the device management message.

In the embodiment of the present invention, after receiving a message such as the Notification message or the normal management session PK2 and PK4, the Gateway parses the message and obtains the identifier of the MOID or the operation node that needs to be managed and the identification information of the device management server. When the device management message is a Notification message, the information of the management object may be the MOID that needs to be managed by the DM Server, and for example, the MOID of the SCOMO management object is: urn:oma:mo:oma-scomo:1.0; when the device management message is a PK2 or a PK4, the information of the management object may be the identifier of the operation node, such as: <LocURI>./settings/wap_settings/CNN</LocURI>.

S503: Obtain an access control right of the management object or the node from the terminal device according to the obtained information of the management object or the node.

In the embodiment of the present invention, the Gateway initiates, according to the obtained identifier of the MOID or the operation node, a management session to the Device and obtains an ACL of the corresponding node or MO, which may be divided to the following.

For the operation node <LocURI>./settings/wap_settings/CNN</LocURI>, if the node has a corresponding ACL, an ACL attribute value of the node is directly returned, and if the node does not have a corresponding ACL, an ACL attribute value inherited by the node needs to be returned.

For the MO, an ACL attribute value of a root node of the MO may be returned, or a set of ACL attribute values of all nodes of the MO is returned.

S504: Determine, according to the identification information of the device management server and the access control right, whether to permit an operation of the device management server.

In the embodiment of the present invention, the Gateway determines, according to the obtained ACL and the obtained identification information of the device management server, whether to permit the operation of the device management server.

S505: If the operation of the device management server is permitted, send the device management message to the terminal device.

In the embodiment of the present server, if in the ACL obtained by the Gateway, the operation of the device management server is permitted, the Gateway sends the device management message to the terminal device; if in the ACL obtained by the Gateway, the operation of the device management server is not permitted, the Gateway does not send the device management message to the terminal device.

In the embodiment, the Gateway replaces the Device to manage ACL right control, which avoids changing an existing device management procedure or a command and reduces processing resource consumption of the Device.

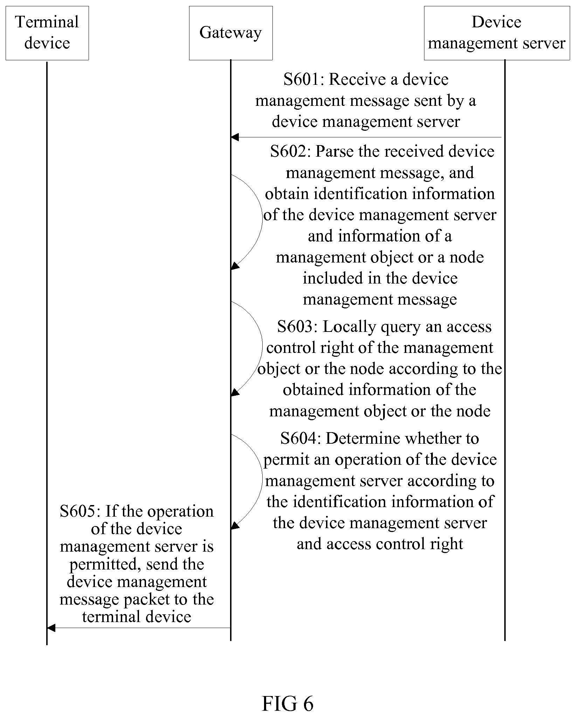

FIG. 6 is a signaling diagram of a device management method according to an embodiment of the present invention. As shown in FIG. 6, the device management method provided by the embodiment of the present invention includes the following steps:
S601: Receive a device management message sent by a device management server.

In the embodiment of the present invention, a Device is only bootstrapped by a Gateway and is not bootstrapped by the DM Server. That is to say, on the Device, only a DMAcc management object of the Gateway exists and a management object of the DM Server does not exist.

In the embodiment of the present invention, the DM Server sends a Notification message or a normal management session PK2 and PK4 to the Gateway. The Notification message provides an MOID that needs to be managed by the DM Server. For example, an MOID of an SCOMO management object is: urn:oma:mo:oma-scomo:1.0, and the Pk2 or the Pk4 provides an identifier of an operation node, such as: <LocURI>./settings/wap_settings/CNN</LocURI>. The Gateway receives the device management message sent by the DM Server.

S602: Parse the received device management message and obtain identification information of the device management server and information of a management object or a node that needs to be managed included in the device management message.

In the embodiment of the present invention, after receiving a message such as the Notification message or the normal management session PK2 and PK4, the Gateway parses the message and obtains the identifier of the MOID or the operation node that needs to be managed and the identification information of the device management server. When the device management message is a Notification message, the information of the management object may be the MOID that needs to be managed by the DM Server, and for example, the MOID of the SCOMO management object is: urn:oma:mo:oma-scomo:1.0; when the device management message is a PK2 or a PK4, the information of the management object may be the identifier of the operation node, such as: <LocURI>./settings/wap_settings/CNN</LocURI>.

S603: Locally query an access control right of the management object or the node according to the obtained information of the management object or the node.

In the embodiment of the present invention, the Gateway queries, according to the obtained identifier of the MOID or the operation node, ACL attribute information of the MO or the node stored by itself, and obtains an ACL attribute value of the corresponding MO, and obtains an ACL attribute value of the corresponding node.

S604: Determine, according to the identification information of the device management server and the access control right, whether to permit an operation of the device management server.

In the embodiment of the present invention, the Gateway determines, according to the obtained ACL and the obtained identification information of the device management server, whether to permit the operation of the device management server.

S605: If the operation of the device management server is permitted, send the device management message to the terminal device.

In the embodiment of the present server, if in the ACL obtained by the Gateway, the operation of the device management server is permitted, the Gateway sends the device management message to the terminal device; if in the ACL obtained by the Gateway, the operation of the device management server is not permitted, the Gateway does not send the device management message to the terminal device.

In the embodiment of the present invention, because the Device is not bootstrapped by the DM Server, the ACL attribute value of the MO or the node on the Device does not include an ID identifier of the corresponding DM Server. As a result, ACL right control can only be performed by the Gateway, a crux of which is that the ACL attribute value of the corresponding MO root node or node on the Device needs to be stored on the Gateway.

In the embodiment, the Gateway replaces the Device to manage the ACL right control, which avoids changing an existing device management procedure or a command and reduces processing resource consumption of the Device.

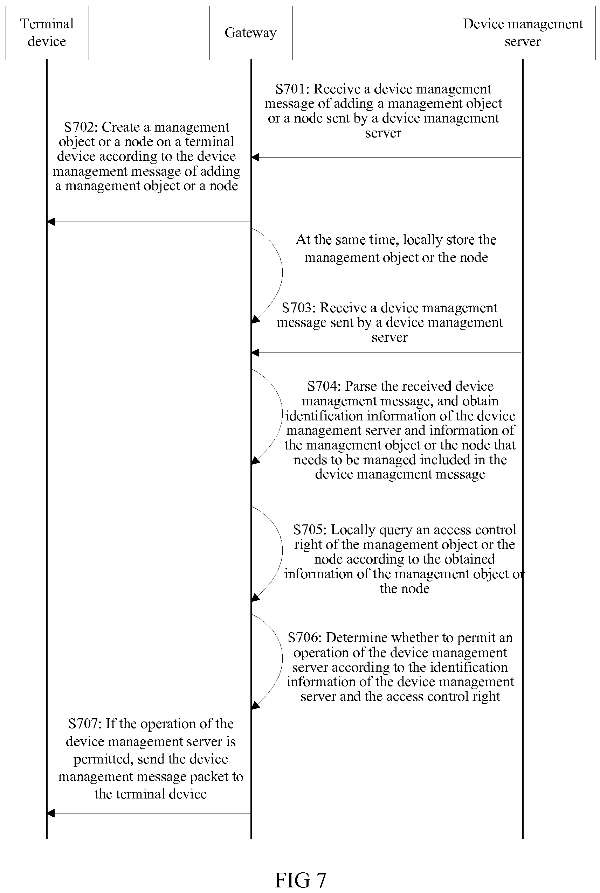

FIG. 7 is a signaling diagram of a device management method according to an embodiment of the present invention. As shown in FIG. 7, the device management method provided by the embodiment of the present invention includes the following steps:
S701: Receive a device management message of adding a management object or a node sent by a device management server.

In the embodiment of the present invention, a Device is only bootstrapped by a Gateway and is not bootstrapped by the DM Server. That is to say, on the Device, only a DMAcc management object of the Gateway exists and a management object of the DM Server does not exist.

In the embodiment of the present invention, the Gateway receives an MO or node creating command initiated by the DM Server.

S702: Add a management object or a node on the terminal device according to the device management message of adding a management object or a node, and locally store the management object or the node at the same time.

In the embodiment of the present invention, the Gateway creates a corresponding MO or node on the Device according to the corresponding command, and stores an ACL value of the MO or the node in the Gateway at the same time, and the ACL attribute value includes an ID of the DM Server performing management, which may specifically be implemented in the following two manners.

The Gateway creates a corresponding node or MO on the Device according to the DM Server command, and at the same time, creates the corresponding node or MO on the Gateway itself, where a corresponding parameter value and attribute value are included, and the ACL attribute value of the corresponding node or MO created on the Gateway includes an ID identifier of the DM Server performing management;

The Gateway creates a corresponding node or MO on the Device according to the DM Server command, and at the same time, stores an ACL attribute value of the corresponding node or MO on the Gateway itself, where the ACL attribute value includes an ID identifier of the DM Server performing management.

S703: Receive the device management message sent by the device management server.

In the embodiment of the present invention, the DM Server sends a Notification message or a normal management session PK2 and PK4 to the Gateway. The Notification message provides an MOID that needs to be managed by the DM Server. For example, an MOID of an SCOMO management object is: urn:oma:mo:oma-scomo:1.0, and the Pk2 or the Pk4 provides an identifier of an operation node, such as: <LocURI>./settings/wap_settings/CNN</LocURI>. The Gateway receives the device management message sent by the DM Server.

S704: Parse the received device management message and obtain identification information of the device management server and information of the management object or the node that needs to be managed included in the device management message.

In the embodiment of the present invention, after receiving a message such as the Notification message or the normal management session PK2 and PK4, the Gateway parses the message and obtains the identifier of the MOID or the operation node that needs to be managed and the identification information of the device management server. When the device management message is a Notification message, the information of the management object may be the MOID that needs to be managed by the DM Server, and for example, the MOID of the SCOMO management object is: urn:oma:mo:oma-scomo:1.0; when the device management message is a PK2 or a PK4, the information of the management object may be the identifier of the operation node, such as: <LocURI>./settings/wap_settings/CNN</LocURI>.

S705: Locally query an access control right of the management object or the node according to the obtained information of the management object or the node.

In the embodiment of the present invention, the Gateway queries, according to the obtained identifier of the MOID or the operation node, ACL attribute information of the MO or the node stored by itself, and obtains an ACL attribute value of the corresponding node, and obtains an ACL attribute value of the corresponding node.

S706: Determine, according to the identification information of the device management server and the access control right, whether to permit an operation of the device management server.

In the embodiment of the present invention, the Gateway determines, according to the obtained ACL and the obtained identification information of the device management server, whether to permit the operation of the device management server.

S707: If the operation of the device management server is permitted, send the device management message to the terminal device.

In the embodiment of the present server, if in the ACL obtained by the Gateway, the operation of the device management server is permitted, the Gateway sends the device management message to the terminal device; if in the ACL obtained by the Gateway, the operation of the device management server is not permitted, the Gateway does not send the device management message to the terminal device.

In the embodiment of the present invention, if what is delivered for the Device by the DM Server through the Gateway is an operation regarding the ACL attribute value, the ACL attribute value of the corresponding node or MO stored on the Gateway changes accordingly.

In the embodiment, the Gateway replaces the Device to manage ACL right control, which avoids changing an existing device management procedure or a command and reduces processing resource consumption of the Device.

### Embodiment 3

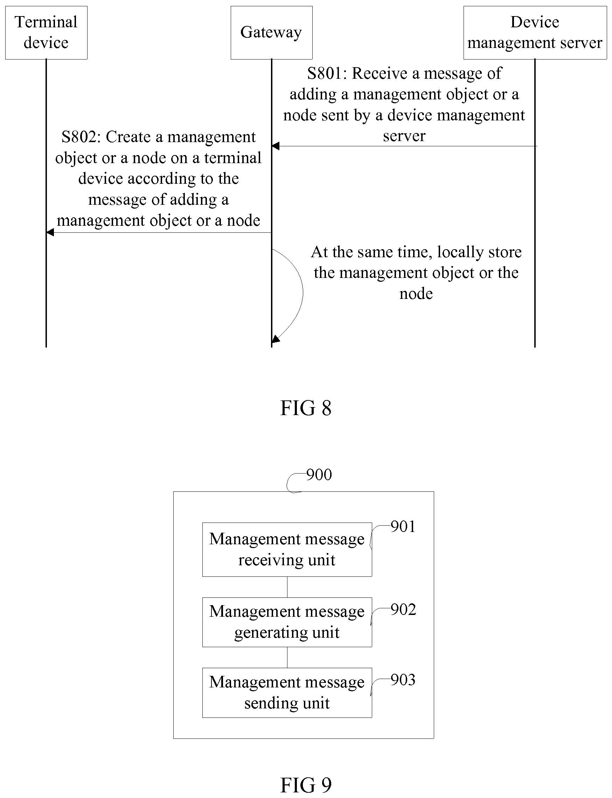

FIG. 8 is a signaling diagram of a device management method according to an embodiment of the present invention. As shown in FIG. 8, the device management method provided by the embodiment of the present invention includes the following steps:
S801: Receive a message of adding a management object or a node sent by a device management server.

In the embodiment of the present invention, a Device is only bootstrapped by a Gateway and is not bootstrapped by the DM Server. That is to say, on the Device, only a DMAcc management object of the Gateway exists and a management object of the DM Server does not exist.

In the embodiment of the present invention, the Gateway receives an MO or node creating command initiated by the DM Server.

S802: Add a management object or a node on the terminal device according to the message of adding a management object or a node, and locally store the management object or the node at the same time.

In the embodiment of the present invention, the Gateway creates a corresponding MO or node on the Device according to the corresponding command, and stores an ACL value of the MO or the node in the Gateway at the same time, where the ACL attribute value includes an ID of the DM Server performing management, which may specifically be implemented in the following two manners.

The Gateway creates a corresponding node or MO on the Device according to the DM Server command, and at the same time, creates the corresponding node or MO on the Gateway itself, where a corresponding parameter value and attribute value are included, and the ACL attribute value of the corresponding node or MO created on the Gateway includes an ID identifier of the DM Server performing management;

The Gateway creates a corresponding node or MO on the Device according to the DM Server command, and at the same time, stores an ACL attribute value of the corresponding node or MO on the Gateway itself, where the ACL attribute value includes an ID identifier of the DM Server performing management.

In another embodiment of the present invention, the device management method may also include steps S703 to S707 as shown in FIG. 7, and specific steps are the same as those shown in FIG. 7 and are not repeatedly described herein.

In this embodiment, in a case that the Device is not bootstrapped by the DM Server, the Gateway creates an ACL on the Device and creates the ACL locally, so that in a case that a Gateway exists, an ACL mechanism of DM may still be normally used to perform right control, and no matter whether the Device is bootstrapped by the DM Server, ACL right control can be correctly performed.

### Embodiment 4

FIG. 9 is a block diagram of a device management apparatus according to an embodiment of the present invention. As shown in FIG. 9, a device management apparatus 900 provided by the embodiment of the present invention includes: a management message receiving unit 901, a management message generating unit 902, and a management message sending unit 903, where:
the management message receiving unit 901 is configured to receive a first device management message sent by a device management server.

In the embodiment of the present invention, a terminal device (Device) is bootstrapped (Bootstrap) by a Gateway and is also bootstrapped by the DM Server. That is to say, both a DMAcc management object of the Gateway and a management object of the DM Server exist on the Device.

In the embodiment of the present invention, the management message receiving unit 901 receives the first device management message sent by the DM Server, where the first device management message includes a Notification, a PK2, or a PK4.

The management message generating unit 902 is configured to generate a second device management message according to the received first device management message, where the second device management message includes identification information of the device management server.

In the embodiment of the present invention, the management message generating unit 902 generates the second device management message according to the first device management message received by the management message receiving unit 901, and provides an ID identifier of the DM Server in the second device management message.

The management message sending unit 903 is configured to send the second device management message to the terminal device.

In the embodiment of the present invention, the management message sending unit 903 sends the generated second device management message to the Device. After receiving the second device management message, the Device performs an ACL comparison: If an access right permits, a corresponding management operation is performed; if the access right does not permit, the management operation is not performed and a failure code and a message are returned.

The device management apparatus provided by the embodiment of the present invention performs ACL right control through the Device, a crux of which is that the Gateway sends the ID identifier of the DM Server to the Device instead of only sending an ID identifier of the Gateway.

By using the device management apparatus provided by the embodiment of the present invention, although what is received by the Device is the device management message sent by the Gateway, the Device still can learn the ID identifier of the DM Server which actually sends the device management message, so that the ACL right control is normally performed.

In another embodiment of the present invention, a DM Server initiates management on a Device and delivers a Notification message to a gateway, and a management message receiving unit 901 receives the Notification message sent by the DM Server, learning that it pre-manages the Device under the Gateway. A management message generating unit 902 generates a Notification message for the Device, and provides an ID identifier of the DM Server in the Notification message, which may be implemented in the following three manners:
Manner A: Reuse a transport field and a ServerID field in the Notification message, where the transport field extends a definition: Proxy=11, which is used for indicating that it is a proxy mode, and ID information of the DM Server is provided in ServerID.
Manner B: Extend the Notification message sent by the Gateway, and provide a Proxy field to indicate whether it is a proxy mode, and reuse a ServerID field at the same time.
Manner C: Extend the Notification message sent by the Gateway, and add a second ServerID field, which is used to provide the ID of the DM Server.

In the solution A and the solution B, only the ID identifier of the DM Server is provided. Because a Digest field in the Notification needs to be generated according to an authentication key of the DM server in a corresponding DMAcc management object on the Device, after receiving the Notification message sent by the DM Server, before generating the Notification, the proxy gateway Gateway needs to first initiate a management session to the Device, and obtain authentication key information of the DM Server from the Device, and then perform a hash calculation on a trigger (trigger information) part in the Notification packet by using the authentication key information to generate abstract data. A management message sending unit 903 sends the generated Notification message to the Device. The Device receives the Notification message delivered by the Gateway and parses the message to obtain the ID identifier of the DM Server, and at the same time, according to an MO ID provided in the Notification message, obtains an ACL attribute value of a corresponding MO and then performs ACL right control. If a right permits, the Device initiates a management session, and if the right does not permit, the Device rejects to initiate the management session.

By using the embodiment, although what is received by the Device is the Notification message sent by the Gateway, the Device still can learn the ID identifier of the DM Server which actually sends the Notification message, so that the ACL right control is normally performed.

In another embodiment of the present invention, a DM Server manages a Device behind a Gateway. A management instruction of the DM Server for the Device is first sent to the Gateway through a Pkg2 or a Pkg4, and a management message receiving unit 901 receives the Pkg2 or the Pkg4 sent by the DM Server. A management message generating unit 902 generates a Pkg2 or a Pkg4 for the Device, and provides an ID identifier of the DM Server in the Pkg2 or the Pkg4, which may be implemented by using the following three solutions.

Solution A: Extend a field, which is used to provide the ID identifier of the DM Server, and a definition of the identifier may be as follows:
SourceSer
Usage: Used to provide an identifier of a DM server that initiates a management session;
Parent element: SyncHdr;
Sub element: LocURI;
Limitation: Only used in a management session message initiated by a Gateway serving as a proxy gateway;
Others: The element is optional.

If the identifier of the DM Server is: LocURI>http://www.syncml.org/mgmt-server, and an identifier of the proxy gateway Gateway is: GatewayUrl, a designation for a source address in the Pkg2 or Pkg4 packet sent by the Gateway is as follows:

```
          <Source>
          <LocURI>GatewayUrl</LocURI>
          </Source>
          <SourceSer>
                <LocURI>http://www.syncml.org/mgmt-server</LocURI>
          </SourceSer>
```

Solution B: Use an existing identifier character to provide the ID identifier of the DM Server, the identifier character is: SourceParent, and use of this field in DM may be redefined as follows:
SourceParent
Usage: Used to provide an identifier of a DM server that initiates a management session;
Parent element: SyncHdr;
Sub element: LocURI;
Limitation: Only used in a management session message initiated by a Gateway serving as a proxy gateway;
Others: The element is optional.

If the identifier of the DM Server is: LocURI>http://www.syncml.org/mgmt-server, and an identifier of the proxy gateway Gateway is: GatewayUrl, a designation for a source address in the Pkg2 or the Pkg4 sent by the Gateway is as follows:

```
          <Source>
                <LocURI>GatewayUrl</LocURI>
          </Source>
          <SourceParent>
                <LocURI>http://www.syncml.org/mgmt-server</LocURI>
          </SourceParent>
```

Solution C: Extend an alert code used in a DM protocol to provide the ID of the DM Server, where a definition of the Alert Code is as follows:

| **Specified Device Management Alert Code** | | |
|---|---|---|
| 12xx | DM Server ID | Used for a proxy gateway to provide an ID identifier of a DM Server |

If the identifier of the DM Server is: LocURI>http://www.syncml.org/mgmt-server, a designation for a server address in the Pkg2 or the Pkg4 sent by the Gateway is as follows:

```
          <Alert>
           <CmdID>2</CmdID>
           <Data> 12xx</Data>
           <Item>
                <Data>http://www.syncml.org/mgmt-server</Data>
           </Item>
          </Alert>
```

A management message sending unit 903 sends the generated Pkg2 or Pkg4 to the Device. The Device receives the Pkg2 or the Pkg4 delivered by the Gateway and parses the message packet to obtain the ID identifier of the DM Server, and at the same time, according to an identifier of an operation node provided in the message packet, obtains an ACL attribute value of a corresponding node and then performs ACL right control. If a right permits, the Device performs a corresponding operation, otherwise the Device rejects to perform the operation.

By using the embodiment, although what is received by the Device is the management instruction sent by the Gateway, the Device still can learn the ID identifier of the DM Server which actually manages it, so that the ACL right control is normally performed.

### Embodiment 5

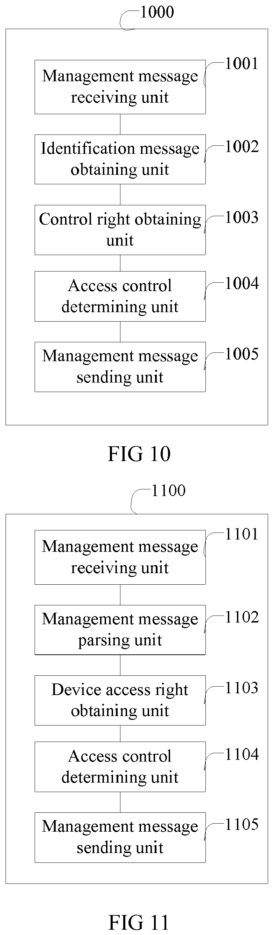

FIG. 10 is a block diagram of a device management apparatus according to an embodiment of the present invention. As shown in FIG. 10, a device management apparatus 1000 provided by the embodiment of the present invention includes: a management message receiving unit 1001, an identification information obtaining unit 1002, a control right obtaining unit 1003, and a management message sending unit 1005, where:
the management message receiving unit 1001 is configured to receive a first device management message sent by a device management server.

In the embodiment of the present invention, the management message receiving unit 1001 receives the device management message sent by the DM Server, where the device management message may be a Notification, a PK2 or a PK4.

The identification information obtaining unit 1002 is configured to obtain identification information of the device management server and information of a management object or a node included in the first device management message.

In the embodiment of the present invention, the identification information obtaining unit 1002 parses the received device management message, and obtains the identification information of the device management server and the information of the management object included in the device management message. When the device management message is a Notification message, the information of the management object may be an MOID that needs to be managed by the DM Server; when the device management message is a PK2 or a PK4, the information of the management object information may be an identifier of an operation node.

The control right obtaining unit 1003 is configured to obtain an access control right of a root node of the management object or the node according to the information of the management object or the node.

In the embodiment of the present invention, the control right obtaining unit 1003 obtains an ACL of the corresponding node or MO according to the obtained information of the management object. The Gateway may initiate a management session to the Device according to the obtained identifier of the MOID or the operation node, obtain the ACL of the corresponding node or MO, and may also locally query the ACL of the corresponding node or MO.

In the embodiment of the present invention, the control right obtaining unit 1003 may include a terminal access right obtaining module and/or a local access right obtaining module, where:
the terminal access right obtaining module is configured to obtain the access control right of the management object from the terminal device according to the obtained information of the management object; and
the local access right obtaining module is configured to locally obtain the access control right of the management object according to the obtained information of the management object.

The management message sending unit 1005 is configured to generate a second device management message when the access control right permits an operation of the device management server, and send the second device management message to the terminal device.

In the embodiment of the present invention, if in the access control list, the operation of the device management server is permitted, the management message sending unit 1005 sends the device management message to the terminal device. If in the access control list, the operation of the device management server is not permitted, the management message sending unit 1005 does not send the device management message to the terminal device.

In another embodiment of the present invention, the device management apparatus 1000 may further include an access control determining unit 1004, configured to determine whether to permit the operation of the device management server according to the identification information of the device management server and the access control right.

In the embodiment of the present invention, the access control determining unit 1004 determines whether the access control list includes the identification information of the device management server, and determines, according to the obtained ACL and the obtained identification information of the device management server, whether a Server that initiates a session meets a requirement.

The device management apparatus provided by the embodiment of the present invention performs ACL right control through the Gateway, a crux of which is that the Gateway obtains an ACL attribute value of the corresponding MO or node on the device that the DM Server intends to manage.

In the embodiment, the Gateway replaces the Device to manage the ACL right control, which avoids changing an existing device management procedure or a command and reduces processing resource consumption of the Device.

FIG. 11 is a block diagram of a device management apparatus according to an embodiment of the present invention. As shown in FIG. 11, a device management apparatus 1100 provided by the embodiment of the present invention includes: a management message receiving unit 1101, a management message parsing unit 1102, a terminal access right obtaining unit 1103, an access control determining unit 1104, and a management message sending unit 1105, where:
the management message receiving unit 1101 is configured to receive a device management message sent by a device management server.

In the embodiment of the present invention, a Device is bootstrapped by a Gateway and is also bootstrapped by the DM Server. That is to say, both a DMAcc management object of the Gateway and a management object of the DM Server exist on the Device.

In the embodiment of the present invention, the DM Server sends a Notification message or a normal management session PK2 and PK4 to the Gateway. The Notification message provides an MOID that needs to be managed by the DM Server. For example, an MOID of an SCOMO management object is: urn:oma:mo:oma-scomo:1.0, and the Pk2 or the Pk4 provides an identifier of an operation node, such as: <LocURI>./settings/wap_settings/CNN</LocURI>. The management message receiving unit 1101 receives the device management message sent by the DM Server.

The management message parsing unit 1102 parses the received device management message, and obtains identification information of the device management server and information of a management object or a node that needs to be managed included in the device management message.

In the embodiment of the present invention, after the management message receiving unit 1101 receives a message such as the Notification message or the normal management session PK2 and PK4, the management message parsing unit 1102 parses the message and obtains the identifier of the MOID or the operation node that needs to be managed and the identification information of the device management server. When the device management message is a Notification message, the information of the management object may be the MOID that needs to be managed by the DM Server, and for example, the MOID of the SCOMO management object is: urn:oma:mo:oma-scomo:1.0; when the device management message is a PK2 or a PK4, the information of the management object may be the identifier of the operation node, such as: <LocURI>./settings/wap_settings/CNN</LocURI>.

The terminal access right obtaining unit 1103 obtains an access control right of the management object or the node from the terminal device according to the obtained information of the management object or the node.

In the embodiment of the present invention, the terminal access right obtaining unit 1103 initiates, according to the obtained identifier of the MOID or the operation node, a management session to the Device and obtains an ACL of the corresponding node or MO, which may be divided to the following.

For the operation node <LocURI>./settings/wap_settings/CNN</LocURI>, if the node has a corresponding ACL, an ACL attribute value of the node is directly returned, and if the node does not have a corresponding ACL, an ACL attribute value inherited by the node needs to be returned.

For the MO, an ACL attribute value of a root node of the MO may be returned, or a set of ACL attribute values of all nodes of the MO is returned.

The access control determining unit 1104 determines, according to the identification information of the device management server and the access control right, whether to permit an operation of the device management server.

In the embodiment of the present invention, the access control determining unit 1104 determines, according to the ACL obtained by the terminal access right obtaining unit 1103 and the identification information of the device management server, whether a Server that initiates a session meets a requirement.

The management message sending unit 1105 sends the device management message to the terminal device when the operation of the device management server is permitted.

In the embodiment of the present invention, if in the ACL obtained by the terminal access right obtaining unit 1103, the operation of the device management server is permitted, the management message sending unit 1105 sends the device management message to the terminal device; if in the ACL obtained by the terminal access right obtaining unit 1103, the operation of the device management server is not permitted, the management message sending unit 1105 does not send the device management message to the terminal device.

In the embodiment, the Gateway replaces the Device to manage ACL right control, which avoids changing an existing device management procedure or a command and reduces processing resource consumption of the Device.

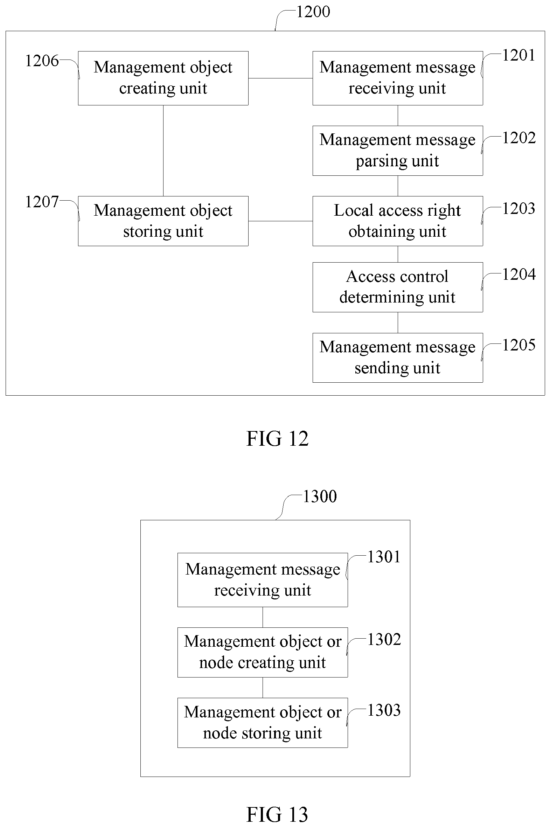

FIG. 12 is a block diagram of a device management apparatus according to an embodiment of the present invention. As shown in FIG. 12, a device management apparatus 1200 provided by the embodiment of the present invention includes: a management message receiving unit 1201, a management message parsing unit 1202, a local access right obtaining unit 1203, an access control determining unit 1204, and a management message sending unit 1205, where:
the management message receiving unit 1201 is configured to receive a device management message sent by a device management server;

In the embodiment of the present invention, a Device is only bootstrapped by a Gateway and is not bootstrapped by the DM Server. That is to say, on the Device, only a DMAcc management object of the Gateway exists, and a management object of the DM Server does not exist.

In the embodiment of the present invention, the DM Server sends a Notification message or a normal management session PK2 and PK4 to the Gateway. The Notification message provides an MOID that needs to be managed by the DM Server. For example, an MOID of an SCOMO management object is: urn:oma:mo:oma-scomo:1.0, and the Pk2 or the Pk4 provides an identifier of an operation node, such as: <LocURI>./settings/wap_settings/CNN</LocURI>. The management message receiving unit 1201 receives the device management message sent by the DM Server.

The management message parsing unit 1202 parses the received device management message, and obtains identification information of the device management server and information of a management object or a node that needs to be managed included in the device management message.

In the embodiment of the present invention, after the management message receiving unit 1201 receives a message such as the Notification message or the normal management session PK2 and PK4, the management message parsing unit 1202 parses the message and obtains the identifier of the MOID or the operation node that needs to be managed and the identification information of the device management server. When the device management message is a Notification message, the information of the management object may be the MOID that needs to be managed by the DM Server, and for example, the MOID of the SCOMO management object is: urn:oma:mo:oma-scomo:1.0; when the device management message is a PK2 or a PK4, the information of the management object may be the identifier of the operation node, such as: <LocURI>./settings/wap_settings/CNN</LocURI>.

The local access right obtaining unit 1203 locally queries an access control right of the management object or the node according to the obtained information of the management object or the node.

In the embodiment of the present invention, the local access right obtaining unit 1203 queries, according to the obtained identifier of the MOID or the operation node, ACL attribute information of the MO or the node stored by itself, and obtains an ACL attribute value of the corresponding node, and obtains an ACL attribute value of the corresponding node.

The access control determining unit 1204 determines, according to the identification information of the device management server and the access control right, whether to permit an operation of the device management server.

In the embodiment of the present invention, the access control determining unit 1204 determines, according to the obtained ACL and the obtained identification information of the device management server, whether a Server that initiates a session meets a requirement.

The management message sending unit 1205 sends the device management message to the terminal device when the operation of the device management server is permitted.

In the embodiment of the present invention, if in the ACL obtained by the local access right obtaining unit 1203, the operation of the device management server is permitted, the management message sending unit 1205 sends the device management message to the terminal device; if in the ACL obtained by the local access right obtaining unit 1203, the operation of the device management server is not permitted, the management message sending unit 1205 does not send the device management message to the terminal device.

In another embodiment of the present invention, the device management apparatus 1200 may further include a management object or node creating unit 1206 and a management object or node storing unit 1207.

The management message receiving unit 1201 receives a device management message of adding a management object or a node sent by the device management server.

In the embodiment of the present invention, the management message receiving unit 1201 is further configured to receive an MO or node creating command initiated by the DM Server.

The management object or node creating unit 1206 adds a management object or a node on the terminal device according to device management message of adding a management object or a node, and at the same time, the management object or node storing unit 1207 locally stores the management object or the node.

In the embodiment of the present invention, the management object or node creating unit 1206 creates the corresponding MO or node on the Device according to the corresponding command, and the management object or node storing unit 1207 stores an ACL value of the MO or the node in the Gateway at the same time, and the ACL attribute value includes an ID of the DM Server performing management, which may specifically be implemented in the following two manners.

The management object or node creating unit 1206 creates the corresponding node or MO on the Device according to the DM Server command, and at the same time, the management object or node storing unit 1207 creates the corresponding node or MO on the Gateway itself, where a corresponding parameter value and attribute value are included, and the ACL attribute value of the corresponding node or MO created on the Gateway includes an ID identifier of the DM Server performing management.

The management object or node creating unit 1206 creates the corresponding node or MO on the Device according to the DM Server command, and at the same time, the management object or node storing unit 1207 stores an ACL attribute value of the corresponding node or MO on the Gateway itself, where the ACL attribute value includes an ID identifier of the DM Server performing management.

In the embodiment of the present invention, if what is delivered for the Device by the DM Server through the Gateway is an operation regarding the ACL attribute value, the ACL attribute value of the corresponding node or MO stored on the Gateway changes accordingly.

In the embodiment, the Gateway replaces the Device to manage ACL right control, which avoids changing an existing device management procedure or a command and reduces processing resource consumption of the Device.

### Embodiment 6

FIG. 13 is a block diagram of a device management apparatus according to an embodiment of the present invention. As shown in FIG. 13, a device management apparatus 1300 provided by the embodiment of the present invention includes: a management message receiving unit 1301, a management object or node creating unit 1302, and a management object or node storing unit 1303, where:
the management message receiving unit 1301 receives a message of adding a management object or a node sent by a device management server.

In the embodiment of the present invention, a Device is only bootstrapped by a Gateway and is not bootstrapped by the DM Server. That is to say, on the Device, only a DMAcc management object of the Gateway exists and a management object of the DM Server does not exist.

In the embodiment of the present invention, the management message receiving unit 1301 receives an MO or node creating command initiated by the DM Server.

The management object or node creating unit 1302 creates a management object or a node on the terminal device according to the message of adding a management object or a node; and at the same time, the management object or node storing unit 1303 locally stores the management object or the node.

In the embodiment of the present invention, the management object or node creating unit 1302 creates the corresponding MO or node on the Device according to the corresponding command, and the management object or node storing unit 1303 stores an ACL value of the MO or the node in the Gateway at the same time, and the ACL attribute value includes an ID of the DM Server performing management, which may specifically be implemented in the following two manners.

The management object or node creating unit 1302 creates the corresponding node or MO on the Device according to the DM Server command, and at the same time, the management object or node storing unit 1303 creates the corresponding node or MO on the Gateway itself, where a corresponding parameter value and attribute value are included, and the ACL attribute value of the corresponding node or MO created on the Gateway includes an ID identifier of the DM Server performing management.

The management object or node creating unit 1302 creates the corresponding node or MO on the Device according to the DM Server command, and at the same time, the management object or node storing unit 1303 stores an ACL attribute value of the corresponding node or MO on the Gateway itself, where the ACL attribute value includes an ID identifier of the DM Server performing management.

In another embodiment of the present invention, the device management apparatus 1300 as shown in FIG. 13 may further include a management message receiving unit, a management message parsing unit, a local access right obtaining unit, an access control determining unit, and a management message sending unit, where functions of the foregoing units are the same as those in FIG. 12, and are not repeatedly described herein.

In this embodiment, in a case that the Device is not bootstrapped by the DM Server, the Gateway creates an ACL on the Device and creates the ACL locally, so that in a case that a Gateway exists, an ACL mechanism of DM may still be normally used to perform right control, and no matter whether the Device is bootstrapped by the DM Server, ACL right control can be correctly performed.

The objectives, technical solutions, and beneficial effects of the present invention are further described in detail in the foregoing specific implementation manners. It should be understood that the foregoing descriptions are merely specific implementation manners of the present invention, but are not intended to limit the protection scope of the present invention. Any modification, equivalent replacement, or improvement made within the principle of the present invention shall fall within the protection scope of the present invention.

## Claims

1. A device management method, comprising:
receiving (S201), by a gateway, a first Notification message sent by a device management, DM, server;
generating (S202), by the gateway, a second Notification message for a device according to the first Notification message, and providing, an ID identifier of the DM server in the second Notification message for the device;
sending (S203), by the gateway, the generated second Notification message to the device; wherein the device parses the generated second Notification message to obtain the ID identifier of the DM Server, and at the same time, according to a management object, MO, ID provided in the second Notification message, obtains an access control list, ACL, attribute value of a corresponding MO and then performs ACL right control by comparing the ID identifier of the DM Server with the ACL attribute value, wherein, based on said comparing, if a right permits, the device initiates a management session with the DM server, and if the right does not permit, the device rejects to initiate the management session with the DM server.

2. The method according to claim 1, wherein the providing the ID identifier of the DM Server in the with the DM server Notification message for the device, comprises one of the following manners:
reusing, by the gateway, a transport field and a ServerID field in the first Notification message sent by the DM server, where the transport field extends a definition: Proxy=11, which is used for indicating that it is a proxy mode, and ID information of the DM Server is provided in ServerID;
extending, by the gateway, the second Notification message sent by the gateway, and providing a Proxy field to indicate whether it is a proxy mode, and reusing a ServerID field at the same time; and
extending, by the gateway, the second Notification message sent by the gateway, and adding a second ServerID field, which is used to provide the ID of the DM Server.

3. A system comprising the DM server, the gateway and the device according to any one of claims 1-2.

## Patentansprüche

1. Vorrichtungsverwaltungsverfahren, das Folgendes umfasst:
Empfangen (S201) durch ein Gateway einer ersten Benachrichtigungsnachricht, die von einem Vorrichtungsverwaltungs(DM)-Server gesendet wurde;
Erzeugen (S202) durch das Gateway einer zweiten Benachrichtigungsnachricht für eine Vorrichtung gemäß der ersten Benachrichtigungsnachricht und Bereitstellen einer ID-Kennung des DM-Servers in der zweiten Benachrichtigungsnachricht für die Vorrichtung;
Senden (S203) durch das Gateway der erzeugten zweiten Benachrichtigungsnachricht an die Vorrichtung; wobei die Vorrichtung die erzeugte zweite Benachrichtigungsnachricht parst, um die ID-Kennung des DM-Servers zu erhalten, und gleichzeitig gemäß einer Verwaltungsobjekt(MO)-ID in der zweiten Benachrichtigungsnachricht einen Zugangssteuerlisten(ACL)-Attributwert eines entsprechenden MO erhält und dann durch Vergleichen der ID-Kennung des DM-Servers mit dem ACL-Attributwert eine ACL-Rechtesteuerung durchführt, wobei auf Basis des Vergleichs, wenn ein Recht dies zulässt, die Vorrichtung eine Verwaltungssitzung mit dem DM-Server initiiert und, wenn das Recht dies nicht zulässt, die Vorrichtung das Initiieren der Verwaltungssitzung mit dem DM-Server zurückweist.

2. Verfahren nach Anspruch 1, wobei das Bereitstellen der ID-Kennung des DM-Servers in der mit der DM-Serverbenachrichtigungsnachricht für die Vorrichtung eine der folgenden Arten umfasst:
Wiederverwenden durch das Gateway eines Transportfeldes und eines ServerID-Feldes in der ersten Benachrichtigungsnachricht, die vom DM-Server gesendet wurde, wo das Transportfeld eine Definition: Proxy=11 erweitert, die verwendet wird, um anzuzeigen, dass es sich um einen Proxymodus handelt, und ID-Informationen des DM-Servers in ServerID bereitgestellt werden;
Erweitern durch das Gateway der zweiten Benachrichtigungsnachricht, die vom Gateway gesendet wurde, und Bereitstellen eines Proxyfeldes, um anzuzeigen, ob es sich um einen Proxymodus handelt, und gleichzeitig Wiederverwenden eines ServerID-Feldes und
Erweitern durch das Gateway der zweiten Benachrichtigungsnachricht, die vom Gateway gesendet wurde, und Hinzufügen eines zweiten ServerID-Feldes, das verwendet wird, um die ID des DM-Servers bereitzustellen.

3. System, das den DM-Server, das Gateway und die Vorrichtung nach einem der Ansprüche 1-2 umfasst.

## Revendications

1. Procédé de gestion d'un dispositif, comprenant les étapes suivantes :
recevoir (S201), par une passerelle, un premier message de notification envoyé par un serveur de dispositif de gestion, DM ;
générer (S202), par la passerelle, un second message de notification pour un dispositif selon le premier message de notification, et fournir un identifiant ID du serveur DM dans le second message de notification pour le dispositif ;
envoyer (S203), par la passerelle, le second message de notification généré au dispositif ; où le dispositif analyse le second message de notification généré pour obtenir l'identifiant ID du serveur DM et, dans le même temps, selon un ID d'objet de gestion, MO, fourni dans le second message de notification, obtient une valeur d'attribut de liste de contrôle d'accès, ACL, d'un MO correspondant et procède ensuite à un contrôle de droit ACL en comparant l'identifiant ID du serveur DM à la valeur d'attribut ACL, où, sur base de ladite comparaison, si un droit le permet, le dispositif initie une session de gestion avec le serveur DM et, si le droit ne permet pas, le dispositif refuse d'initier la session de gestion avec le serveur DM.

2. Procédé selon la revendication 1, dans lequel fournir l'identifiant ID du serveur DM avec le message de notification de serveur DM pour le dispositif s'effectue de l'une des manières suivantes :
réutiliser, par la passerelle, un champ de transport et un champ ServerlD dans le premier message de notification envoyé par le serveur DM, où le champ de transport étend une définition: Proxy = 11, qui est utilisée pour indiquer qu'il s'agit d'un mode proxy, et les informations ID du serveur DM sont fournies dans ServerlD ;
étendre, par la passerelle, le second message de notification envoyé par la passerelle, et fournir un champ Proxy pour indiquer s'il s'agit d'un mode proxy, et réutiliser un champ ServerlD dans le même temps ; et étendre, par la passerelle, le second message de notification envoyé par la passerelle,
et
ajouter un second champ ServerID qui est utilisé pour fournir l'ID du serveur DM.

3. Système comprenant le serveur DM, la passerelle et le dispositif selon l'une quelconque des revendications 1 et 2.
